# EUROPEAN PATENT APPLICATION

(11) **EP 0 667 205 A1**
(43) Date of publication of application: **16.08.1995**
(21) Application number: 95300569.1
(22) Date of filing: 30.01.1995
(51) Int. Cl.: B23K 9/067, B23K 9/073

(54) **Synchronized pulse arc starter and stabilizer for arc welding**

(30) Priority: 10.02.1994 US 194709
(71) Applicant: MILLER ELECTRIC MANUFACTURING COMPANY, Appleton, Wisconsin 54914 (US)
(72) Inventor: Hutchison, Richard M., Appleton, Wisconsin 54912 (US)
(74) Representative: Rackham, Stephen Neil

(57) **Abstract**

An apparatus for stabilizing a welding arc includes a source of welding current (T1) connected across the welding terminal (104) and the workpiece terminal (103) and an impulse transformer (T2). A switch (105) is provided to controllably connect the impulse transformer (T2) in parallel with the source of welding current when the welding arc needs to be started or re-established. The source of power may be ac or dc, and in one embodiment is a sinusoidal ac source. The power for the impulse transformer (T2) may be derived from the welding output.

## Description

This application relates generally to power supplies for gas tungsten arc welding (GTAW) and in particular to a method and apparatus for stabilizing the arc in GTAW.

Gas tungsten arc welding (GTAW), also called tungsten inert gas (TIG) welding, is a well known method for welding metals, in particular aluminum and magnesium. A description of GTAW, including the problems associated with welding aluminum and magnesium, may be found in Welding Handbook. Chapter 3, Gas Tungsten Arc Welding, pages 74-107, 1991, published by the American Welding Society.

It is well known in the prior art to provide square wave ac GTAW power sources. Because such power supplies can be costly, there is therefore the need for sinusoidal 50 or 60 cycle GTAW power supplies. One such power supply is a sine wave power supply disclosed in U.S. Patent 5,187,428, which is hereby incorporated by reference. However, on such sinusoidal 60 cycle GTAW power supplies it is not uncommon for the arc to be extinguished at the current reversal because the transition time is relatively slow.

It is also well known that high voltage is required for starting the welding arc when it is undesirable or practical to start the arc by touch or by other means. For safety and other reasons it is not appropriate to have dc or 60 cycle ac high voltage at the welding electrode. Thus, many prior art GTAW power supplies provide RF high voltage to start and stabilize (reignite on a half cycle basis) because radio frequency high voltage will not cause dangerous electrical shocks to the operator.

A spark gap oscillator is widely used today to provide radio frequency high voltage to start and stabilize the arc. While such radio frequency high voltage does stabilize the arc, it has serious short-comings. First, the radio high frequency high voltage spark gap oscillator typically runs continuously. This can create a high level of continuous radio frequency interference. Also, for dc welding it is desirable to synchronize the polarity of the high voltage with the polarity of the welding current, but that is not possible with a spark gap oscillator. In addition to being desirable to synchronize the polarity of the high voltage with the polarity of the welding current it is desirable to synchronize with current reversals. It is difficult to do so with a spark gap oscillator. Moreover, the use of continuous RF high voltage to start an arc when welding in a dc straight polarity does not necessarily provide enough energy to assist in starting the arc, but it will provide energy sufficient to stabilize the arc. Finally, a spark gap oscillator requires a separate power source than the power supplied to the arc. This necessitates the use of additional components and adds to cost and complexity of design.

Accordingly, it is desirable to have a method and apparatus for starting and stabilizing a GTAW arc that addresses one or more of the deficiencies stated above. In particular, there is a need for an arc starter and stabilizer that does not create continuous radio frequency interference. Preferably it would utilize a pulse or a series of pulses because a pulse is not considered as objectionable as continuous radio frequency with regard to interference. Additionally, it is desirable to start and stabilize an arc with a high voltage source that is of the same polarity as the welding current and is capable of providing a high voltage at the beginning of each half cycle. Finally, the device will preferably have the capability of providing enough instant energy to assist in arc starting and utilize the welding power as its source of power.

According to this invention a stabilizer for a welding power supply comprises:
an electrode terminal and a workpiece terminal;
an impulse power supply suitable to be connected across the electrode terminal and workpiece terminal; and
a switch for controllably activating the impulse power supply.

A particular embodiment of a starter and stabilizer for arc welding will now be described with reference to the accompanying drawings, in which:-
Figure 1 is a schematic diagram of the power and impulse circuit of the preferred embodiment of a synchronized pulse arc starter and stabilizer 100 constructed in accordance with the present invention; and
Figure 2 is a schematic diagram of the control circuit of Figure 1.

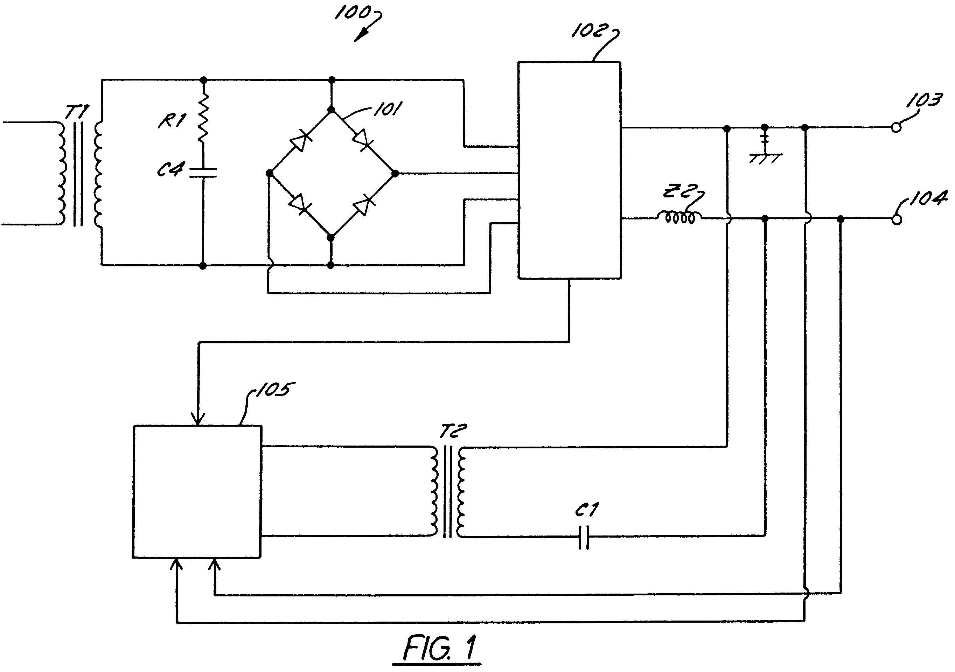

Referring now to Figure 1, a schematic diagram of the power and impulse circuit of the preferred embodiment of a synchronized pulse arc starter and stabilizer 100 is shown. Broadly speaking, synchronized pulse arc starter and stabilizer 100 provide a pulse to the load when the arc is not present, either at start up or when the arc is extinguished during the welding process, such as usually happens at current reversal for a sinusoidal power supply.

As will be described in greater detail below, dc welding synchronized pulse arc starter and stabilizer 100 provide a pulse that is in the same polarity as the welding current (that needs to be established). Moreover, for ac welding the pulse is synchronized so that the first pulse is delivered at the beginning of the half cycle if the arc is not immediately re-established. Subsequent pulses will be provided until the arc is re-established. The pulses are narrow, approximately 2 µsec at the base, and very high, on the order of 5000 V. Of course, as one skilled in the art should recognize, it is easy to vary the parameters of the pulses by selecting different components.

The welding power supply stabilized by synchronized pulse arc starter and stabilizer 100 includes a welding transformer T1, a diode bridge 101, a mode select switch 102. Synchronized pulse arc starter and stabilizer 100 includes a transformer T2, a control circuit 105 and a capacitor C1. The welding output and the impulse output are provided to a workpiece terminal 103 and an electrode terminal 104.

Transformer T1 includes a primary and a secondary winding. As shown in Figure 1 transformer T1 is a single phase transformer, and may be constructed in accordance with U.S. Patent No. 5,187,428. Transformer T1 may be constructed to receive either 200, 230 or 460 ac at 50 or 60 Hz on its primary. Of course, transformer T1 could be designed for other voltages and frequencies as well.

In the preferred embodiment transformer T1 is constructed with a turns ratio of approximately 3:1 to step down a 230 volt input and produce an output of approximately 75 volts at the secondary of transformer T1. The 75 volt signal is provided to diode bridge 101 and mode select switch 102. A capacitor C4 and resistor R3 are provided across the rectifier 101 transformer T1 to snub high voltages and protect rectifier 101.

Depending on the user selected mode, implemented by mode select switch 102, an ac signal, an electrode positive dc signal, or an electrode negative dc signal is provided to a welding output comprised of workpiece 103 and electrode 104. Accordingly, the welder can weld with ac current, or with either polarity dc current.

In the event an ac output is selected through mode select switch 102 the current output is a sinusoidal ac output, having an open circuit voltage of approximately 75 volts and a relatively slow transition through zero. If a dc output is selected through mode select switch 102, the output is a rectified dc current with an open circuit voltage of approximately 75 volts, and may be either polarity: electrode positive or electrode negative.

As stated above, synchronized pulse arc starter and stabilizer 100 provide a high voltage pulse to start and stabilize the arc. This pulse is provided by impulse transformer T2. In the preferred embodiment transformer T2 has a turns ratio of approximately 10:1 to step up a 70 volt input to approximately 700 volts. Of course, as one skilled in the art will recognize, the turns ratio may be something other than the preferred ratio, and still be within the scope of the invention.

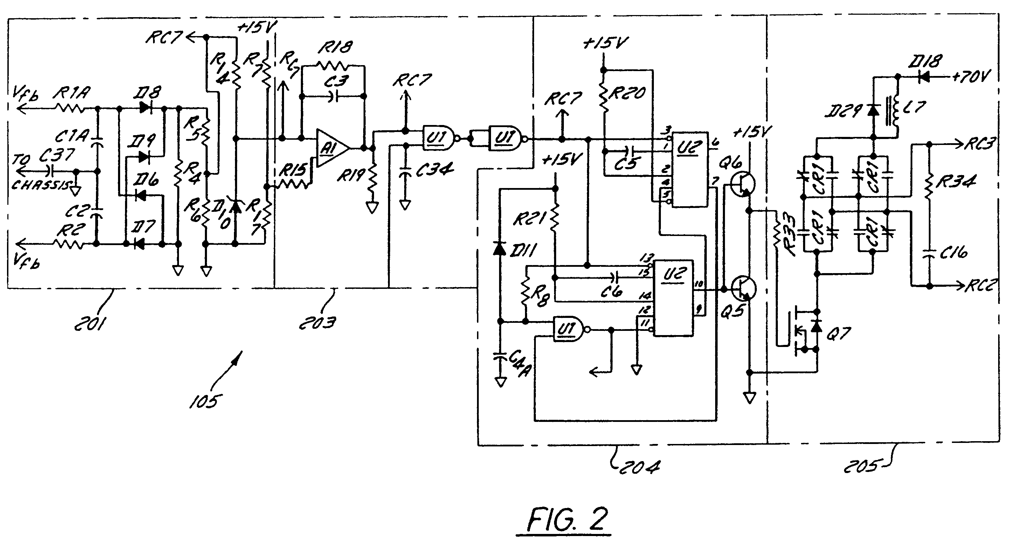

As will be described below with reference to Figure 2, a control circuit 105 senses when the arc is not present. Upon determining the absence of the arc, control circuit 105 connects a pulse across the primary of impulse transformer T2. The pulse goes from 0 to approximately 100 amps in about 25 µsec. The current is then abruptly stopped, and the inductance of impulse transformer T2 causes a very high voltage spike in the opposite direction, often called a fly back spike. In the preferred embodiment the spike has a magnitude of approximately 5000 V on the secondary side.

For dc welding the polarity of the 100 amp pulse is selected so that the fly back spike will have the same polarity as the welding current that is about to be established. This is accomplished through mode select switch 102 and relays within control circuit 105.

For ac welding the polarity of the pulse is fixed at reverse polarity (electrode positive) because the current reversal from electrode positive to electrode negative is more likely to be unstable.

This spike is applied to workpiece 103 and electrode 104 to start or re-establish the arc. Because control circuit 105 senses when the arc is out, the pulse is provided on demand. This avoids the need for a user selection of start only or continuous stabilization, such as that commonly found on power supplies using high frequency to start and stabilize the arc.

As may be seen in Figure 1, impulse transformer T2 and its associated components (capacitor C1, e.g.) are in parallel with the welding current source, across the arc load. The parallel connection of impulse transformer T2 and its associated components with the welding current source will be described herein as impulse transformer T2 being in parallel with or across the welding power source. In an alternative embodiment impulse transformer T2 is connected in series with the arc load and the welding current source.

Capacitor C1 isolates transformer T2 from the slow (relative to the impulse signal) 50 or 60 Hz welding current provided by transformer T1. Similarly, arc Z2 isolates the welding current circuit from the fast pulse provided by impulse transformer T2.

Referring now to Figure 2, control circuit 105 of synchronized pulse arc starter and stabilizer 100 includes a voltage level sensing circuit 201, a voltage level comparator 203, a pulse generator 204 and a polarity circuit 205. It is easier to explain the details of control circuit 105 by first providing a broad overview of the functions of voltage level sensing circuit 201, voltage level comparator 203, pulse generator 204 and polarity circuit 205.

Generally speaking, voltage level sensing circuit 201 senses the voltage across the workpiece terminal 103 and electrode terminal 104. The output voltage is filtered and provided to voltage level comparator 203 which compares the output voltage to a predetermined reference voltage.

In the preferred embodiment the reference voltages are 40-45 V, or approximately one-half the difference between the open circuit voltage (the voltage when the arc is not established and the pulse is needed) and the arc voltage (the voltage when the arc is established and the pulse is not needed).

When voltage level comparator 203 determines, based on the comparison between the reference and sensed voltages, that there is no arc present, then voltage level comparator provides a trigger signal to pulse generator 204. Voltage level comparator 203 will provide the pulse if either the arc has been extinguished for some time, or as soon as the arc fails to re-establish itself after a polarity reversal. Thus, through the use of voltage level comparator 203 the impulse transformer is synchronized to the sinusoidal welding output.

When pulse generator 204 receives a trigger signal, indicating that the arc is extinguished, it causes polarity circuit 205 to connect the primary of impulse transformer T2 (Figure 1) to a 70 V voltage source, for approximately 25 µsec. During this time the current through the primary of impulse transformer T2 rises from approximately 0 amps to approximately 100 amps.

After 25 µsec has elapsed pulse generator 204 causes polarity circuit 205 to abruptly remove power from the primary of transformer T2, forcing a very rapid current change in the primary of transformer T2. This rapid current change generates a fly back voltage in the opposite direction, which is a pulse having a width at the base of approximately 2 µsec and a peak height of approximately 5,000 V. As described above with reference to Figure 1, the 5,000 V is applied to the terminals 103 and 104, and will re-start the arc. In an alternative embodiment a forward pulse is provided instead of the fly back pulse.

In the embodiment shown pulse generator 204 will continue to receive trigger signals until the arc is re-established. In the preferred embodiment the repetition rate is about 400-500 Hz. Thus, if the arc is not re-established on the first pulse, subsequent pulses will be provided until the arc is re-established.

In the dc mode the polarity relay connects the 70 V power source to the impulse transformer primaries in accordance with the user selected welding current polarity. In this way the proper polarity is applied so that when the electrode is negative the impulse transformer will also provide electrode negative voltage and when the electrode is positive the impulse transformer will apply electrode positive voltage.

In an alternative embodiment, for ac welding the polarity of the ac current is sensed by control circuit 105. The pulse is then applied in the same polarity as the next half cycle. The polarity of the next half cycle can be easily determined by the polarity of the input signal, or by the polarity of the output, assuming the output has not been short circuited. The correct polarity pulse may be generated using two primary windings on T2 and an electronic switch to connect one of the two primary windings to the voltage source. In this embodiment the polarity relay used for selecting the polarity of the pulse when dc welding may be replaced with the electronic switch.

Having now generally explained the function of control circuit 105, the details of construction and operation may be considered. Voltage level sense 201 monitors the voltage across the output terminals 103 and 104 of the welder. Specifically, the voltage on electrode terminal 104 is impressed on input RC1-4. Input RC1-5 is connected to work terminal 103, and input RC10-1 is connected the chassis ground. The voltages are impressed across RC1-4 and RC1-5 whenever the welding output contactor is engaged.

Both inputs are RC filtered by a resistor R1 or R2 and a capacitor C1 or C2. The filtering slows the response time of the input circuit, in order to help avoid false triggering of the arc starter due to self-generated noise. The filtered signal is full wave rectified by diode bridge D6-D9, connected in a conventional manner. Diode bridge D6-D9 produces a dc voltage across a resistor R4 having a magnitude corresponding to the magnitude of the output current. Resistor R4 is provided as a load on bridge diodes D6-D9 to ensure their forward conduction, and comprise a voltage divider in conjunction with resistors R1 and R2.

This voltage across resistor R4 is further reduced through a voltage divider comprised of resistors R5 and R6. Thus voltage sense circuit 201 provides a positive polarity signal at the node common to resistors R5 and R6, that has a magnitude responsive to the magnitude of the voltage across terminals 103 and 104.

This voltage is provided to voltage level comparator 203 through a resistor R14, and to the non-inverting input of an op amp comparator A1. Resistor R14 is provided, along with a zener diode D10, to clamp the voltage at the non-inverting input of op amp A1 to 10 volts peak.

The inverting input of op amp A1 receives a reference voltage from the divider comprised of a pair of resistors R7 and R17. This sets the voltage threshold which triggers the arc starter and initiates a pulse.

When the arc voltage drives the voltage at the non-inverting input of op amp A1 above the threshold voltage applied to the inverting input of op amp A1, the output of op amp A1 is driven high. This output will remain high as long as the input voltage remains above the set threshold.

A resistor R18 is provided across the non-inverting input and output of op amp A1 to create a dc hysteresis loop. When the output of op amp A1 is low, a feedback voltage through resistor R18 partially subtracts from the applied arc voltage at the non-inverting input of op amp A1. As the reference voltage on at the inverting input of op amp A1 is exceeded, the output of op amp goes high, and the feedback voltage adds to the applied arc voltage. Thus, a slight drop in applied voltage will not be sufficient to cause the output of op amp A1 to change states. This increase in applied voltage forces the op amp to turn on "hard" and prevents transitional oscillations from occurring on the output. Similarly, When the arc voltage is falling, the reverse action occurs providing the same response on turn off.

A capacitor C3 is provided in parallel with resistor R18, and serves the same function as resistor R18, but only in an ac capacity. The hysteresis effect does not steadily (dc) add to the applied arc voltage feedback, but, rather gives a transitional spike at the time the output of comparator A1 switches states.

The output of op amp A1 is provided to one input of a NAND gate U1A. A resistor R19 provides a load impedance for the output of op amp A1 and the input of NAND gate U1A. The remaining input of NAND gate U1A receives an enable signal. The enable signal is provided when it is desired to provide the pulse for starting and stabilizing the arc.

The output of NAND gate U1A is provided to both inputs of a second NAND gate U1B. Thus, the output of NAND gate U1B is high when the arc needs to be started or re-established, and the output is low when the arc is present or the arc starting is disabled. The output of NAND gate U1B is provided to pulse generator 204.

Pulse generator 204 includes a timer U2. The reset terminals of timer U2 (pins 3 and 13) are active in the low state. Thus, when the voltage supplied by NAND gate U1B 4 goes "high," it enables the timing functions of timer U2.

A NAND gate U1C is provided to delay the input to the trigger pin 11 of timer U2. The output of NAND gate U2B supplies an RC timing circuit comprised of a resistor R8 and a capacitor C4. NAND gate U1C provides a slight delay. The delay is very short but is required for the proper acceptance of the falling edge trigger signal applied to pin 11 of timer U2. A diode D11 is included as a discharge path for capacitor C4 at power down.

The output pin 7 of timer U2 is normally "high" and is routed to an input of NAND gate U1C. When the voltage on capacitor C4 exceeds the threshold level of the RC timer input to NAND gate U1C, the output of NAND gate U1C goes low thus providing the required falling edge trigger pulse to input pin 11 of timer U2.

When triggered, output pin 10 of timer U2 goes high and drives the totem pole drivers comprised of transistors Q5 and Q6 into the on state for a pulse duration determined by the time constant of an RC circuit comprised of a capacitor C6 and a resistor R21.

After output pin 10 of timer U2 times out (goes low), output pin 9 of timer U2 goes "high," providing input pin 4 of timer U2 with a rising edge trigger pulse. The trigger pulse starts the timing function at output pin 7 of timer U2 which goes "low" while timing. The length of time output pin 7 of timer U2 remains low is determined by the time constant of an RC circuit comprised of a capacitor C5 and a resistor R20. Output pin 7 of timer U2 is connected to an input of NAND gate U1C, thus driving the output of NAND gate U1C high. This sets the stage for the next timed pulse to occur. The timed pulses will continue to be generated until the arc is established. Thus, capacitor C5 and resistor R20 determine the pulse repetition rate.

The output of the "totem pole" drivers is provided to a transistor Q7 of polarity circuit 205 through a gate resistor R33. When transistor Q7 is on, the polarity relay connects a +70 volts from the power supply to the primary of impulse transformer T2.

The 70 volt supply may be derived from the welder output voltage, and is routed through a diode D18 and an inductor L7 to the contacts of relay CR1 and to one end of the primary of impulse transformer T2. Diode D18 is provided to prevent the primary kick-back voltage from getting back into the power supply. A diode D29 is connected across inductor L7 to provide a free-wheeling current path around inductor L7.

The return from the primary impulse transformer T2 goes through another section of relay CR1 to the drain of transistor Q7. When driven into the on state, transistor Q7 routes the current to ground, which is the return path of the +70 volts to the power supply.

The rise time of the current through the primary of the impulse transformer is limited by the inductance of inductor L7. In the preferred embodiment inductor L7 has an inductance of 25 µH, so as to prevent impulse transformer T2 from giving a voltage spike sufficient to cause early ignition of the weld arc. Also, if ignition of the arc occurs at the on time of the impulse transformer, the secondary becomes loaded through the weld arc and its impedance drops significantly. In alternative embodiments the impulse may occur at early or later, including a forward pulse rather than a fly back pulse.

The low secondary impedance is reflected back into the impulse primary circuit and causes excessive primary inrush current to develop. By limiting the rise time this condition does not develop and aids in the power dissipation of transistor Q7.

A snubber circuit comprised of a resistor R34 and a capacitor C16 is provided to limit the voltage across transistor Q7 within its voltage rating. The snubber must be designed to allow sufficient kick-back voltage to achieve the desired secondary voltage.

The polarity of the pulses from the secondary of the impulse transformer is determined by the position of the contact of relay CR1. This polarity is selected by a micro-switch mounted on the polarity/range switch located on the front panel of the welder.

As stated above, the 70 volt supply may be derived from the welder output voltage, this provides the advantage that the arc stabilizer does not need an additional source of power. Thus, the stabilizer may be a "stand alone" unit, located near and deriving power from the welding output.

## Claims

1. An arc stabilizer (100) for a welding power supply comprising:
an electrode terminal (104) and a workpiece terminal (103);
an impulse power supply (T2) suitable to be connected across the electrode terminal (104) and workpiece terminal (103); and
a switch (105) for controllably activating the impulse power supply.

2. An arc stabilizer (100) for a welding power supply comprising:
an electrode terminal (104) and a workpiece terminal (103);
an impulse power supply (T2) distinct from the welding power supply, and suitable to be connected across the electrode terminal (104) and workpiece terminal (103); and
a switch (105) for controllably activating the impulse power supply.

3. An arc stabilizer according to claim 1 or 2, wherein the impulse power supply comprises:
an impulse transformer (T2) having a secondary winding connected in parallel with the welding power supply;
a sense circuit (102) for determining the presence or absence of a welding arc; and
a control circuit (105) connected to said sense circuit (102) and connected to the switch, wherein the control circuit (105) enables the switch in the event there is no welding arc.

4. The arc stabilizer according to any one of the preceding claims, wherein the control circuit (105) includes means for activating the impulse power repetitively in the event the arc is not established.

5. An arc stabilizer according to any one of the preceding claims, wherein power for the impulse power supply (T2) is derived from the output of the welding power supply.

6. The arc stabilizer according to any one of the preceding claims, wherein the welding power supply comprises a source of sinusoidal ac welding current or a source of square wave ac welding current.

7. The arc stabilizer according to any one of the preceding claims, wherein the impulse power supply is connected in an electrode positive polarity.

8. The arc stabilizer according to any one of claims 1 to 6, wherein the impulse power supply is connected in the polarity of the welding arc to be established.

9. The arc stabilizer according to any one of claims 1 to 5, wherein the welding power supply further comprises a source of dc welding current.

10. The arc stabilizer according to claim 9, wherein the impulse power supply is connected in the same polarity as the dc welding current.
